# EUROPEAN PATENT APPLICATION

(11) **EP 0 884 488 A2**
(43) Date of publication of application: **16.12.1998**
(21) Application number: 97310592.7
(22) Date of filing: 24.12.1997
(51) Int. Cl.: F16B 21/12, F16B 19/00, H05K 5/00, F24C 7/02, H05B 6/80, F16B 5/02

(54) **A fastener**

(30) Priority: 12.06.1997 KR 9724361
(71) Applicant: Samsung Electronics Co., Ltd., Suwon-City, Kyungi-do (KR)
(72) Inventor: Lee, Gi-Hun, Kwonseon-gu, Suwon City, Kyungki-do (KR); Kim, Sang-Han, Suwon City, Kyungki-do (KR)
(74) Representative: Read, Matthew Charles

(57) **Abstract**

A fastener having a head (210) and a shank (220) is disclosed. The shank (220) is resiliently radially compressible. The fastener can be used for joining panels (30,50) in an overlapping relationship and is primarily for use in holding the panels together which form the casing of a microwave oven.

## Description

The present invention relates to a fastener including a head portion and a shank portion.

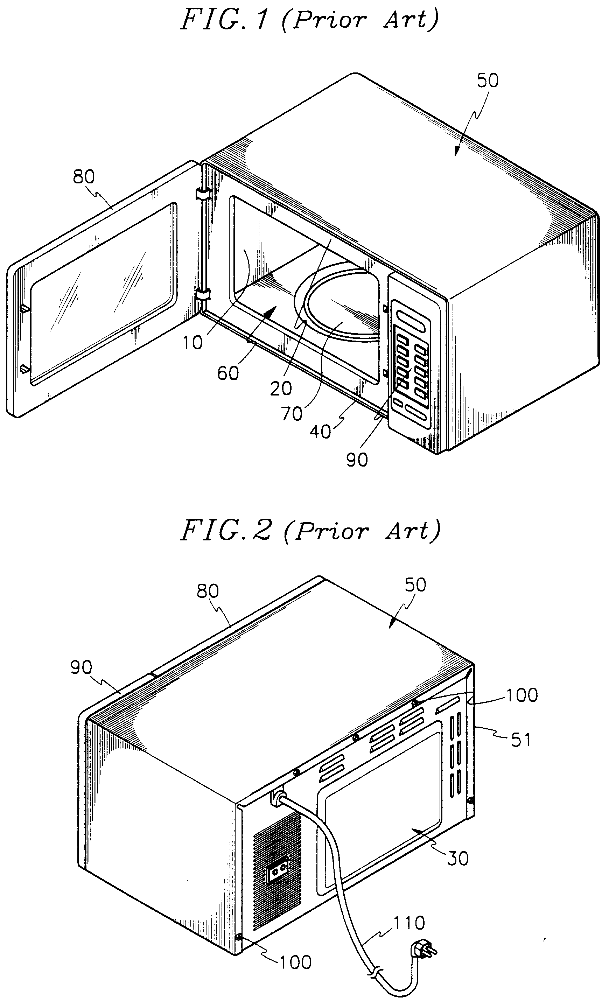

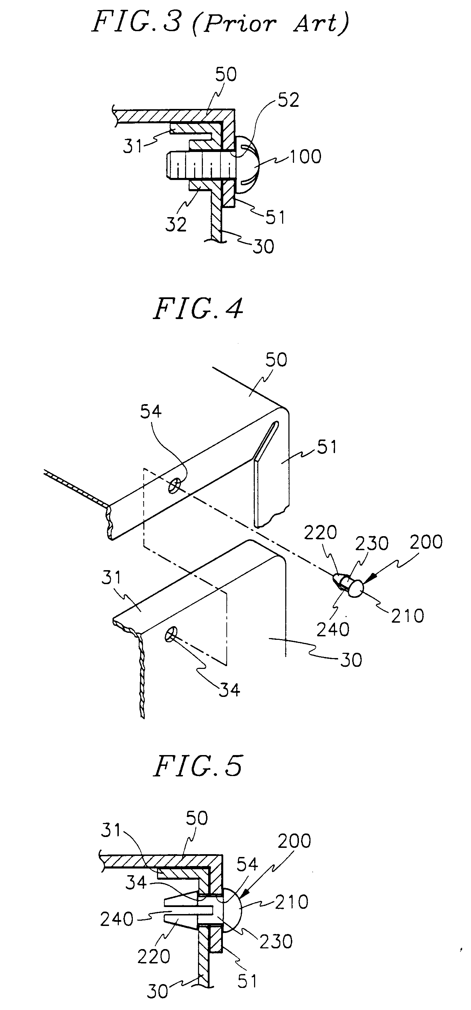

A conventional microwave oven is illustrated in Figures 1 and 3 and includes a cooking chamber 60 defining a cavity 10 having a front panel 20, a back panel 30, and an outer panel 50. A turntable 70 on which food to be cooked is placed is disposed in the cooking chamber 60 which is also provided with a door 80 to enable access to the cavity 10 and a control unit 90 is mounted adjacent the door 80 to enable various cooking modes to be selected and for activating a magnetron (not shown) and other components.

The back panel 30 includes a flange 31 extending orthogonally to the plane of the back panel 30 which cooperates with a corresponding flange provided on the outer panel 50. A plurality of mutually spaced screw holes 100 are provided in the back panel 30 adjacent to the flange 31 and correspond to holes in the flange provided on the outer panel 50 when the back panel 30 and outer panel 50 are brought together. The two panels are held together by screws which locate in the holes in each panel 30,50.

To operate a conventional microwave oven, food is placed on the turntable 70 and the door 80 is closed. The required cooking mode is selected from the control unit 90 and the turntable rotates whilst microwaves at 2.456Hz are generated by the magnetron (not shown) and are directed into the cavity 10 to cook the food.

A disadvantage with conventional microwave ovens is that it is time consuming and difficult to drill threaded screw holes in the back and outer panels 30,50. This results in increased manufacturing costs. Additionally, a repair and maintenance of a conventional microwave oven is tedious as the screws take time to remove from the holes in the back and outer panels 30,50.

It is an object to provide a microwave oven which overcomes or substantially alleviates the aforementioned problems.

A fastener according to the present invention is characterised in that the shank is resiliently radially compressible.

In the preferred embodiment, the shank includes an axially extending slot.

Preferably, the shank includes a reduced waist portion adjacent the head portion.

A portion of the shank portion is preferably chamfered away from the head portion.

Embodiments of the present invention will now be described, by way of example only, in which:
Figure 1 is a front perspective view of a conventional microwave oven;
Figure 2 is a rear perspective view of the conventional microwave oven of Figure 1;
Figure 3 is a sectional view showing how a back panel and an outer panel of a conventional microwave oven are fastened together;
Figure 4 is an exploded perspective view of a back panel and an outer panel according to an embodiment of the present invention; and
Figure 5 is a sectional view of the assembled back panel and outer panel according to an embodiment of the present invention.

Referring now to Figures 4 and 5, a plurality of through holes 34,54 are provided in the back and outer panels 30,50 which are in alignment when the back panel 30 and the outer panel 50 are assembled. A fastener 200 for coupling the back panel 30 to outer panel 50 is inserted in each through hole such that it passes through the back and rear panels 30,50. The fasteners are push fitted into the holes and comprise a pair of resilient arms 220 which deflect towards each other to enable insertion and regain their original configuration once a chamfered end portion has passed through and protrudes from the holes. The back and outer panels 30,50 locate in a narrower waist portion 230 of the fastener 200 and are held between the chamfered end portion and a head portion 210 which tightly engages with the rear surface of the outer panel 50.

The resilient arms 220 are provided with a slot 240 extending longitudinally of the fastener which allows them to deflect towards each other during insertion. The resilient nature of the material from which the fasteners are made ensures that the arms 220 regain their original configuration once the fastener has been fully inserted, thereby firmly seating the back and outer panels 30,50 in the waist portion 230 of the fastener.

To enable the fastener 200 to be cut easily when it is to be removed for disassembly of the microwave oven, it is made from a resilient plastics material.

During manufacture of the microwave oven in accordance with a preferred embodiment, the outer panel 50 and the back panel 30 are brought together so that the holes in each panel correspond to each other and are aligned.

Once the through holes 54 and 34 have been aligned, the resilient arms of a fastener 200 can be pushed through each hole until the back and outer panels 30,50 engage on the waist portion 230.

The head of the fastener 200 tightly engages with the rear surface of the outer panel 50, and the chamfered portion 220 engages with the front surface of the back panel 30, such that the back panel 30 and outer panel 50 are coupled together.

To uncouple the back panel and outer panel 30,50 the head 210 of each fastener 200 can be broken off using pliers. A new fastener 200 is used to re-couple the two panels 30,50 following disassembly.

The present invention avoids any need for fastening screws used in the assembly of a conventional microwave oven. Instead, a fastener is used which is push fitted into holes provided in the back and rear panels of the microwave oven.

## Claims

**1.** A fastener including a head portion (210) and a shank portion (220), **characterised in that** the shank (220) is resiliently radially compressible.

**2.** A fastener according to claim 1, wherein the shank (220) includes an axially extending slot (240).

**3.** A fastener according to claim 1 or 2, wherein the shank (220) includes a reduced waist portion (230) adjacent the head portion (210).

**3.** A fastener according to any preceding claim wherein a portion of the shank portion (220) is chamfered away from the head portion (210).

**4.** A case for an electrical appliance having panel members fastened by fasteners according to any preceding claim.

**5.** A microwave oven having panel members fastened by fasteners according to any of claims 1 to 3.

**6.** An outer panel assembling apparatus for a microwave oven in which a back panel and the outer panel can be assembled or separated from each other, characterised in that the back panel and outer panel are assembled by a plurality of clips, each clip being narrower in a diameter thereof by the resilient force of the clip when the clip passes through clip through-holes and then being wider again after passing through said clip through-holes.

**7.** The apparatus of claim 6, wherein the plurality of clips, respectively comprise a head formed at a front end of each clip and for being tightly engaged with a rear surface of the outer panel without further passing through the clip through-hole formed in the outer panel; hooks formed at tail portion of each clip and for being tightly engaged with a front surface of the back panel after passing through the paired clip through-holes formed in the back panel and outer panel; a connection portion for connecting the head and hooks and for being positioned in said paired clip through-holes when those components are assembled; and a cut-groove for allowing portion between end point of the hooks and a central point of the connection portion to be narrower in a diameter thereof when the hooks passes through the paired clip through-holes and to be wider again after passing through said holes.

**8.** The apparatus of claim 6, wherein the clips are made of plastic material for an easy separation between the back panel and the outer panel by the cutting action.
